# EUROPÄISCHE PATENTSCHRIFT

(11) **EP 3 585 638 B1**
(45) Veröffentlichungstag und Bekanntmachung des Hinweises auf die Patenterteilung: **20.07.2022**
(21) Anmeldenummer: 18708623.6
(22) Anmeldetag: 23.02.2018
(51) Int. Cl.: B60K 35/00, B60K 37/02, G03B 21/28

(54) **KRAFTFAHRZEUG MIT EINER ANZEIGEANORDNUNG UND VERFAHREN ZUM BETREIBEN EINER ANZEIGEANORDNUNG EINES KRAFTFAHRZEUGS**
MOTOR VEHICLE HAVING A DISPLAY ASSEMBLY AND METHOD FOR OPERATING A DISPLAY ASSEMBLY OF A MOTOR VEHICLE
VÉHICULE AUTOMOBILE ÉQUIPÉ D'UN SYSTÈME D'AFFICHAGE ET PROCÉDÉ POUR FAIRE FONCTIONNER UN SYSTÈME D'AFFICHAGE D'UN VÉHICULE AUTOMOBILE

(30) Priorität: 27.02.2017 DE 102017203173
(43) Veröffentlichungstag der Anmeldung: 01.01.2020
(73) Patentinhaber: Audi AG, 85045 Ingolstadt (DE)
(72) Erfinder: KNITTL, Thomas, 85049 Ingolstadt (DE); ZEINAR, Peter, 85049 Ingolstadt (DE); BEIERLEIN, Ulrich, 85051 Ingolstadt (DE); TANNEBERGER, Soenke, 85049 Ingolstadt (DE); OLLEFERS, Edwin, 85055 Ingolstadt (DE); ROTHFUSS, Karl-Heinz, 85080 Gaimersheim (DE); MERK, Imanuel, 92345 Dietfurt a.d. Altmühl (DE)
(86) Internationale Anmeldenummer: PCT/EP2018/054462
(87) Internationale Veröffentlichungsnummer: WO 2018/154032

(56) Entgegenhaltungen:
- EP-A2- 0 646 823
- DE-A1-102014 019 122
- DE-U1-202013 007 158

## Beschreibung

Die Erfindung betrifft ein Kraftfahrzeug mit einer Anzeigeanordnung sowie ein Verfahren zum Betreiben einer Anzeigeanordnung eines Kraftfahrzeugs.

Eine Anzeigeanordnung des Stands der Technik ist aus der EP0646823 A2 bekannt.

In Kraftfahrzeugen besteht immer stärker der Bedarf, eine Vielzahl von Informationen für Fahrer und auch Mitfahrer besonders übersichtlich darstellen zu können. Beispielsweise sollen während der Fahrt mit einem Kraftfahrzeug Navigationshinweise, Informationen von einem Infotainmentsystem und gegebenenfalls auch noch Warnhinweise bedarfsgerecht und gut einsehbar für Fahrer und Beifahrer angezeigt werden können. Die üblicherweise zweidimensional aufbereitete Darstellung mittels verschiedener im Kraftfahrzeuginnenraum angeordneter Displays kann dazu führen, dass die Vielfalt an Informationen unter Umständen nicht besonders gut ablesbar oder anderweitig ungünstig dargestellt wird.

In Fernsehgeräten und im Kino ist eine dreidimensionale Darstellung heutzutage bereits üblich. Allerdings ist für dieses Erlebnis eine dazugehörige Brille notwendig. 3D-Displays, welche ohne eine derartige Brille auskommen, sind ebenfalls bereits erhältlich. Derartige 3D-Displays werden teilweise schon mit relativ kleinen Abmessungen in Spielekonsolen oder Notebooks verbaut. Bei manchen technischen Spielereien oder auch in der Schaufenstergestaltung gibt es Aufbauten, die mithilfe von Spiegelebenen Anzeigen mit Tiefenwirkung erzielen und welche ebenfalls ohne Brille auskommen. Die vorstehend genannten Beispiele sind nur schlecht für den Einsatz in Kraftfahrzeugen geeignet. Die dreidimensionale Darstellung von dreidimensionalen Inhalten mithilfe einer Brille bringt die Brille als solche als Beeinträchtigung mit. Sie dunkelt die Umgebung ab und schränkt das Sichtfeld ein, was insbesondere für einen Fahrer eines Kraftfahrzeugs sehr nachteilig wäre. Bauartbedingt bieten 3D-Displays ohne Brille einen sehr eingeschränkten Betrachtungswinkel und haben oftmals auch eine relativ geringe Auflösung. In großen Forma-24.02.2017 15:50:00 ten sind sie im Übrigen auch nicht erhältlich. Dreidimensionale Effekte, welche durch eine bestimmte Anordnung von Spiegeln und Displays erzielt werden können, bringen den Nachteil mit sich, dass bei großen Aufbauten die für die dreidimensionale Darstellung erforderlichen Spiegelungen nicht gegen unerwünschte Effekte abgeschirmt werden können, infolgedessen störende Reflexe auftreten.

Es ist die Aufgabe der vorliegenden Erfindung, eine Lösung bereitzustellen, mittels welcher in einem Kraftfahrzeug eine Vielzahl von Informationen besonders gut angezeigt werden kann.

Diese Aufgabe wird durch ein Kraftfahrzeug mit einer Anzeigeanordnung sowie durch ein Verfahren zum Betreiben einer Anzeigeanordnung eines Kraftfahrzeugs mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Das erfindungsgemäße Kraftfahrzeug weist eine Anzeigeanordnung auf, die eine erste Anzeigeeinrichtung mit einer ersten Anzeigefläche umfasst, welche von einer Fahrgastzelle des Kraftfahrzeugs aus zumindest teilweise einsehbar angeordnet ist. Die Anzeigeanordnung umfasst eine zweite Anzeigeeinrichtung mit einer zweiten Anzeigefläche, welche von der Fahrgastzelle aus uneinsehbar angeordnet ist. Die beiden Anzeigeflächen sind derart zueinander angeordnet, dass sich die zweite Anzeigefläche in der ersten Anzeigefläche spiegelt und infolgedessen eine von der Fahrgastzelle aus einsehbare virtuelle Anzeigeebene hinter der ersten Anzeigefläche erzeugt wird.

Bei der Erfindung wird also die spiegelnde Eigenschaft der ersten Anzeigefläche so ausgenutzt, dass sich die zweite Anzeigefläche, welche von der Fahrgastzelle aus uneinsehbar angeordnet ist, derart in der ersten Anzeigefläche spiegelt, dass hinter der ersten Anzeigefläche eine von der Fahrgastzelle aus einsehbare virtuelle Anzeigeebene erzeugt wird. In dieser virtuellen Anzeigeebene sind die mittels der zweiten Anzeigeeinrichtung auf ihrer zweiten Anzeigefläche angezeigten Inhalte für Fahrzeuginsassen sichtbar. Die spiegelnden Eigenschaften der ersten Anzeigefläche werden also dazu genutzt, eine zusätzliche Anzeigeebene in Form der virtuellen Anzeigeebene zu schaffen.

Die Inhalte, welche mittels der ersten Anzeigeeinrichtung oder der zweiten Anzeigeeinrichtung angezeigt werden, erscheinen für Fahrzeuginsassen also dreidimensional hintereinander angeordnet, wobei mittels der ersten Anzeigeeinrichtung angezeigte Inhalte und mittels der zweiten Anzeigeeinrichtung angezeigte Inhalte auf der ersten Anzeigefläche und der virtuellen Anzeigeebene hintereinander angeordnet erscheinen. Dadurch können verschiedene Inhalte über die erste Anzeigefläche und die virtuelle Anzeigeebene verteilt angezeigt werden. Besonders wichtige Informationen, wie beispielsweise eine Geschwindigkeitsanzeige, Warnhinweise und dergleichen, können beispielsweise auf der ersten Anzeigefläche angezeigt werden. Informationen, welche beispielsweise das Infotainmentsystem des Kraftfahrzeugs betreffen, können beispielsweise mittels der zweiten Anzeigeeinrichtung angezeigt werden, sodass diese Informationen auf der virtuellen Anzeigeebene hinter der ersten Anzeigefläche erscheinen. Zudem ist es auch möglich, die erste Anzeigeeinrichtung und die zweite Anzeigeeinrichtung derart anzusteuern, dass mittels diesen angezeigte Symbole sich gegenseitig ergänzen. Beispielsweise wäre es denkbar, dass mittels der ersten Anzeigeeinrichtung ein Teil eines Navigationspfeils angezeigt wird, wobei ein weiterer Teil des Navigationspfeils mittels der zweiten Anzeigeeinrichtung angezeigt wird, sodass sich der Navigationspfeil als Ganzes dreidimensional über die erste Anzeigefläche und die virtuelle Anzeigeebene erstreckt.

Zur Ansteuerung der Anzeigeanordnung ist eine Steuereinrichtung vorgesehen, welche dazu eingerichtet ist, beide Anzeigeeinrichtungen anzusteuern. Über eine geeignete Beschichtung der ersten Anzeigefläche und/oder über eine geeignete Helligkeitseinstellung der zweiten Anzeigeeinrichtung kann die Stärke der Spiegelung der ersten Anzeigefläche und der zweiten Anzeigefläche und somit die Stärke der Darstellung der virtuellen Anzeigeebene gesteuert werden.

Bei der erfindungsgemäßen Anzeigeanordnung des Kraftfahrzeugs wird also keine 3D-Brille benötigt, um einen dreidimensionalen Anzeigeeffekt für Fahrzeuginsassen zu erzielen. Die Qualität der Darstellung mittels der beiden Anzeigeeinrichtungen kann, wie bereits erwähnt, durch eine entsprechend geeignete spiegelnde Beschichtung der ersten Anzeigefläche und/oder durch eine geeignete Einstellung der Helligkeit der zweiten Anzeigeeinrichtung präzise gesteuert werden. Mittels der erfindungsgemäßen Anzeigeeinrichtung des Kraftfahrzeugs können somit eine Vielzahl von Informationen für Fahrer und Beifahrer sowie auch für weitere Fahrzeuginsassen besonders gut aufbereitet und dreidimensional dargestellt werden.

Die Erfindung sieht vor, dass die erste Anzeigefläche einen Teilbereich aufweist, welcher von der Fahrgastzelle aus unsichtbar, also uneinsehbar, und derart zur zweiten Anzeigefläche angeordnet ist, dass sich der Teilbereich in der zweiten Anzeigefläche spiegelt und infolgedessen eine weitere von der Fahrgastzelle aus einsehbare virtuelle Anzeigeebene hinter der virtuellen Anzeigeebene erzeugt wird. Zusätzlich zur ersten Anzeigefläche und der virtuellen Anzeigefläche, welche aufgrund der Spiegelung der zweiten Anzeigefläche in der ersten Anzeigefläche erzeugt wird, ist es vorzugsweise also vorgesehen, eine dritte Anzeigeebene in Form der weiteren virtuellen Anzeigeebene zu erzeugen. Dies wird dadurch erzielt, dass der von der Fahrgastzelle aus unsichtbare beziehungsweise nicht einsehbare Teilbereich der ersten Anzeigefläche sich wiederum in der zweiten Anzeigefläche spiegelt, wodurch die von der Fahrgastzelle aus einsehbare weitere virtuelle Anzeigeebene hinter der anderen virtuellen Anzeigeebene erzeugt wird. Insgesamt werden also drei Anzeigeebenen ermöglicht, wobei nur die erste Anzeigefläche sich tatsächlich auch dort befindet, wo sie für einen Fahrzeuginsassen sichtbar ist, wohingegen die beiden anderen virtuellen Anzeigeebenen, wie ihre Bezeichnung es schon sagt, rein virtueller Natur sind und aufgrund von den beschriebenen Spiegelungen an den jeweiligen Anzeigeflächen entstehen. Durch das Vorsehen der weiteren virtuellen Anzeigeebene können noch mehr Inhalte mittels der Anzeigeanordnung dreidimensional dargestellt werden. Durch eine entsprechend stark spiegelnde Beschichtung der zweiten Anzeigefläche und einer passenden Helligkeitssteuerung zumindest des Teilbereichs der ersten Anzeigefläche kann die Qualität der Darstellung der weiteren virtuellen Anzeigeebene präzise gesteuert werden. Warnhinweise und besonders wichtige Hinweise können vorzugsweise an der ersten Anzeigefläche angezeigt werden, wobei weniger wichtige Informationen auf den dahinter liegenden virtuellen Anzeigeebenen angezeigt werden. Ferner ist es auch möglich, die beiden Anzeigeeinrichtungen derart anzusteuern, dass ein Symbol oder auch ein anderes beliebiges Objekt sich dreidimensional über die erste Anzeigefläche und die beiden virtuellen Anzeigeebenen erstreckend dargestellt wird. Dies kann beispielsweise für Navigationsanzeigen besonders sinnvoll sein.

Eine weitere vorteilhafte Ausführungsform der Erfindung sieht vor, dass die erste Anzeigefläche gekrümmt ist. Beispielsweise kann die erste Anzeigefläche um eine Hochachse des Kraftfahrzeugs gekrümmt sein. Durch die Krümmung der ersten Anzeigefläche wird der dreidimensionale Effekt zusätzlich noch verstärkt. Es ist aber auch möglich, dass die erste Anzeigefläche nicht gekrümmt, also eben ist.

Gemäß einer weiteren vorteilhaften Ausführungsform der Erfindung ist es vorgesehen, dass die erste Anzeigefläche und die zweite Anzeigefläche im Bereich eines Armaturenbretts des Kraftfahrzeugs unterhalb von einer Windschutzscheibe des Kraftfahrzeugs angeordnet sind. Im Bereich des Armaturenbretts können die beiden Anzeigeflächen besonders gut eingebettet und vor störendem Lichteinfall bewahrt werden. Die beiden Anzeigeflächen können beispielsweise in einen Instrumententafelträger des Kraftfahrzeugs eingebettet sein.

In weiterer vorteilhafter Ausgestaltung der Erfindung ist es vorgesehen, dass die erste Anzeigefläche und die zweite Anzeigefläche sich in Fahrzeugquerrichtung von einem Fahrersitzbereich bis zu einem Beifahrersitzbereich erstrecken. Vorzugsweise erstrecken sich die beiden Anzeigeflächen über die gesamte Breite der Fahrgastzelle des Kraftfahrzeugs. Dadurch können mittels der beiden Anzeigeeinrichtungen besonders großflächig Inhalte für Fahrer und Beifahrer dargestellt werden, und zwar auf dreidimensionale Art und Weise. Die mittels der beiden Anzeigeeinrichtungen angezeigten Informationen können dadurch besonders einfach intelligent gestaffelt werden, was die Verständlichkeit verbessert und die Erlebnisqualität für Fahrer und Beifahrer steigert. Dadurch, dass sich die Anzeigeflächen über die gesamte Breite des Kraftfahrzeugs erstrecken, können auf den Fahrer und den Beifahrer angepasste dreidimensionale Inhalte besonders einfach im Bereich von jeweiligen Sichtfeldern von Fahrer und Beifahrer dargestellt werden. Die große Breite der beiden Anzeigeflächen ermöglicht zudem immer die Inhalte so darzustellen, dass sowohl Fahrer und Beifahrer die Inhalte gut sehen können.

Eine weitere vorteilhafte Ausführungsform der Erfindung sieht vor, dass das Kraftfahrzeug eine Erfassungseinrichtung aufweist, welche dazu ausgelegt ist, eine Augenposition von zumindest einem Fahrzeuginsassen zu erfassen, wobei eine Steuereinrichtung dazu eingerichtet ist, zumindest eine der beiden Anzeigeeinrichtungen in Abhängigkeit von der erfassten Augenposition anzusteuern, um einen Parallaxeneffekt auszugleichen. Es ist also vorzugsweise vorgesehen, die Verschiebung von Inhalten zwischen der ersten Anzeigefläche und der virtuellen Anzeigeebene beziehungsweise den virtuellen Anzeigeebenen zu berücksichtigten, die durch die hintereinander angeordneten Anzeigeebenen in Abhängigkeit von der Augenposition eines Fahrzeuginsassen entsteht, also den sogenannten Parallaxeneffekt, zu berücksichtigen. Die mittels der Anzeigeeinrichtungen dreidimensional aufgrund der Spiegelung dargestellten Inhalte können also in Bezug auf die Sitzposition, insbesondere in Bezug auf die jeweilige Augenposition eines Fahrzeuginsassen, angepasst werden. Zur genauen Bestimmung der Sitzposition beziehungsweise der Augenposition kann beispielsweise die Erfassungseinrichtung eine Fahrzeuginnenraumkamera aufweisen. Durch die Berücksichtigung der Augenposition und den Ausgleich des Parallaxeneffekts kann die dreidimensionale Darstellung von Inhalten über die verschiedenen Anzeigeebenen besonders exakt reproduzierbar für verschiedenste Augenposition realisiert werden.

Gemäß einer weiteren vorteilhaften Ausführungsform der Erfindung ist es vorgesehen, dass zumindest eine der beiden Anzeigeeinrichtungen ein Bildschirm ist, welcher dazu ausgelegt ist, blickwinkelabhängig zwei unterschiedliche Bildschirminhalte anzuzeigen. Bei dieser Art von Bildschirm handelt es sich also um ein sogenanntes Dual-View-Display. Ein derartiges Display ermöglicht die Darstellung von zwei Bildern auf ein und demselben Bildschirm, wobei beispielsweise ein Fahrer und ein Beifahrer aufgrund ihres unterschiedlichen Blickwinkels jeweils ein unterschiedliches Bild sehen. Während vom Fahrersitz alleine aus beispielsweise nur die Navigationskarte oder der Bordcomputer zu sehen ist, kann der Beifahrer beispielsweise einen Film auf ein und demselben Bildschirm ansehen. In Kombination mit den mehreren erzeugbaren Anzeigeebenen kann dadurch die zur Verfügung stehende Fläche zur Darstellung von Inhalten verdoppelt werden, eine entsprechend hohe Auflösung des zumindest einen Dual-View-Displays vorausgesetzt. Es können auch beide Anzeigeeinrichtungen als Dual-View-Displays ausgebildet sind. In dem Fall können sowohl auf der ersten Anzeigefläche als auch auf der dahinter angeordneten virtuellen Anzeigeebene für z.B. den Fahrer und Beifahrer gleichzeitig unterschiedliche Inhalte angezeigt werden.

Eine weitere vorteilhafte Ausführungsform der Erfindung sieht vor, dass die Erfassungseinrichtung dazu ausgelegt ist, jeweilige Augenpositionen von einem Fahrer und Beifahrer zu erfassen, wobei die Steuereinrichtung dazu eingerichtet ist, den Bildschirm, welcher dazu ausgelegt ist, blickwinkelabhängig zwei unterschiedliche Bildschirminhalte anzuzeigen, in Abhängigkeit von den erfassten Augenpositionen anzusteuern, um einen Parallaxeneffekt für den Fahrer und den Beifahrer auszugleichen. Dadurch, dass zumindest einer der beiden Anzeigeeinrichtungen der besagte Bildschirm ist, der blickwinkelabhängig zwei unterschiedliche Bildschirminhalte anzeigen kann, ist es möglich, den Parallaxeneffekt gleichzeitig für Fahrer und Beifahrer auszugleichen. Vorzugsweise sind beide Anzeigeeinrichtungen in Form eines derartigen Bildschirms ausgebildet, sodass im Falle der drei Anzeigeebenen, also dem Vorhandensein von den besagten zwei virtuellen Anzeigeebenen, der Parallaxeneffekt für den Fahrer und den Beifahrer gleichermaßen über alle drei Anzeigeebenen ausgeglichen werden kann. Dabei ist es zum einen möglich, dass durch den Fahrer und den Beifahrer an sich unterschiedliche Inhalte aufgrund ihres unterschiedlichen Blickwinkels angezeigt werden. Alternativ ist es aber genauso gut möglich, dass für den Fahrer und den Beifahrer exakt die gleichen Inhalte mit der gleichen Relativpositionierung der Inhalte über die drei Anzeigeebenen oder auch zwei Anzeigeebenen angezeigt werden, was erst dadurch möglich wird, dass die Anzeigeeinrichtungen in Form des besagten Dual-View-Displays ausgelegt sind.

Eine weitere vorteilhafte Ausführungsform der Erfindung sieht vor, dass die erste Anzeigefläche unterhalb von einer Hutze bezogen auf eine Vorderkante der Hutze zurückversetzt angeordnet ist. Die erste Anzeigefläche wird dadurch besonders gut vor unerwünschten Lichteinstrahlungen und Spiegelungseffekten geschützt. Die zweite Anzeigefläche ist vorzugsweise bezogen auf die Fahrzeughochrichtung unterhalb von der ersten Anzeigefläche und in Fahrzeuglängsrichtung etwas vor der ersten Anzeigefläche angeordnet. Die beiden Anzeigeflächen können beispielsweise parallel zueinander ausgerichtet sein, sodass bei den Spiegelungen keine Verzerrungen entstehen, die nachträglich noch durch eine entsprechende Ansteuerung der Anzeigeeinrichtungen korrigiert werden müssten.

Bei dem erfindungsgemäßen Verfahren zum Betreiben der erfindungsgemäßen Anzeigeanordnung oder einer vorteilhaften Ausführungsform der erfindungsgemäßen Anzeigeanordnung des Kraftfahrzeugs werden die erste Anzeigeeinrichtung und die zweite Anzeigeeinrichtung derart angesteuert, dass Inhalte auf der ersten Anzeigefläche und der virtuellen Anzeigeebene angezeigt werden. Vorteilhafte Ausgestaltungen des erfindungsgemäßen Kraftfahrzeugs mit der Anzeigeanordnung sind als vorteilhafte Ausgestaltungen des erfindungsgemäßen Verfahrens und umgekehrt anzusehen, wobei das erfindungsgemäße Kraftfahrzeug beziehungsweise die erfindungsgemäße Anzeigeanordnung insbesondere Mittel zur Durchführung der Verfahrensschritte aufweist.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: eine schematische Seitenansicht eines Kraftfahrzeugs, wobei eine Anzeigeanordnung mit zwei parallel zueinander ausgerichteten Anzeigeeinrichtungen dargestellt ist, mittels welchen durch Spiegelungseffekte mehrere hintereinander angeordnete virtuelle Bildebenen erzeugt werden;
- Fig. 2: eine schematische Perspektivansicht auf die Fahrgastzelle des Kraftfahrzeugs, wobei die Anordnung der Anzeigeeinrichtungen und der hintereinander angeordneten virtuellen Anzeigeebenen dargestellt ist;
- Fig. 3: eine schematische Draufsicht auf die Fahrgastzelle, wobei die Darstellung von fahrspezifischen Inhalten mittels der Anzeigeeinrichtungen für einen Fahrer dargestellt ist;
- Fig. 4: eine weitere schematische Draufsicht auf die Fahrgastzelle des Kraftfahrzeugs, wobei außer dem Fahrer noch ein Beifahrer dargestellt ist, die jeweils direkt vor sich fahrerspezifische und beifahrerspezifische Inhalte angezeigt bekommen;
- Fig. 5: eine weitere schematische Draufsicht auf die Fahrgastzelle, wobei der Fahrer und der Beifahrer mittels der Anzeigeeinrichtungen gemeinsame Inhalte angezeigt bekommen; und in

- Fig. 6: eine weitere schematische Draufsicht auf die Fahrgastzelle des Kraftfahrzeugs, wobei eine Kamera und eine Steuereinrichtung schematisch angedeutet sind, mittels welchen ein Parallaxeneffekt für den Fahrer in Abhängigkeit von seiner Augen- beziehungsweise Kopfposition angepasst wird.

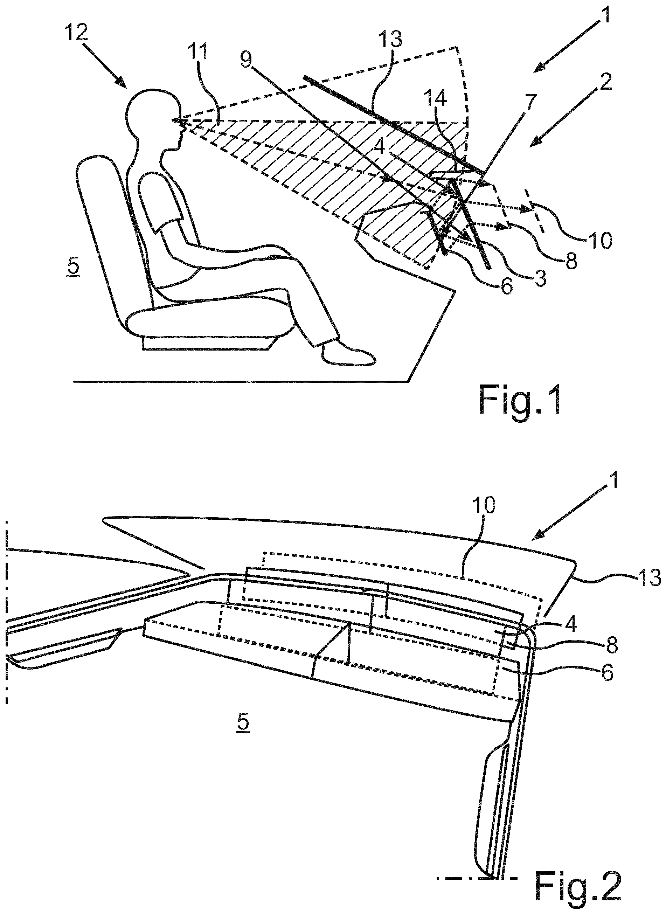

Ein Kraftfahrzeug 1 ist in einer schematischen Seitenansicht in Fig. 1 gezeigt. Das Kraftfahrzeug 1 umfasst eine Anzeigeanordnung 2, welche eine erste Anzeigeeinrichtung 3 mit einer ersten Anzeigefläche 4 umfasst, die von einer Fahrgastzelle 5 des Kraftfahrzeugs 1 aus zumindest teilweise einsehbar angeordnet ist. Zu der Anzeigeanordnung 2 gehört noch eine zweite Anzeigeeinrichtung 6 mit einer zweiten Anzeigefläche 7, welche von der Fahrgastzelle 5 aus uneinsehbar angeordnet ist. Die beiden Anzeigeflächen 4, 7 sind derart zueinander angeordnet, dass sich die zweite Anzeigefläche 7 in der ersten Anzeigefläche 4 spiegelt und infolgedessen eine von der Fahrgastzelle 5 aus einsehbare virtuelle Anzeigeebene 8 hinter der ersten Anzeigefläche erzeugt wird.

Die erste Anzeigefläche 4 weist zudem einen Teilbereich 9 auf, welcher von der Fahrgastzelle 5 aus uneinsehbar und derart zur zweiten Anzeigefläche 7 angeordnet ist, dass sich der Teilbereich 9 in der zweiten Anzeigefläche 7 spiegelt und infolgedessen eine weitere von der Fahrgastzelle 5 aus einsehbare virtuelle Anzeigeebene 10 hinter der virtuellen Anzeigeebene 8 erzeugt wird.

Bei den beiden Anzeigeeinrichtungen 3, 4 kann es sich beispielsweise um Flachbildschirme, zum Beispiel in Form von TFT-Monitoren oder dergleichen handeln. Wesentlich dabei ist, unabhängig von der eigentlichen Technologie der Anzeigeeinrichtungen, dass die beiden Anzeigeflächen 4 und 7 spiegelnd ausgebildet sind, sodass durch die beschriebene Spiegelung der Anzeigeflächen 4, 7 die virtuellen Bildebenen 8, 10 erzeugt werden können.

Ein Sichtfeld 11 eines Fahrers 12 ist zum besseren Verständnis schematisch angedeutet. Wie zu erkennen, blickt der Fahrer 12 nach vorne durch eine Windschutzscheibe 13 des Kraftfahrzeugs 1, wobei unterhalb von der Windschutzscheibe 13 und einer Hutze 14 die beiden Anzeigeeinrichtungen 3, 6 angeordnet sind. Durch die Hutze 14 werden beide Anzeigeeinrichtungen 3, 6 zuverlässig vor unerwünschten Lichteinfällen, insbesondere vor Sonneneinstrahlung, geschützt, sodass die Darstellungsqualität der beiden Anzeigeeinrichtungen 3, 6 nicht durch Lichteinstrahlungen beeinträchtigt wird. In Fahrzeuglängsrichtung gesehen, genauer in Vorwärtsfahrtrichtung gesehen, ist die zweite Anzeigefläche 7 vor der ersten Anzeigefläche 4 angeordnet. Die zweite Anzeigefläche 7 ist dabei so weit unterhalb von der ersten Anzeigefläche 4 angeordnet, dass diese vom Fahrer 12 nicht einsehbar ist. Beide Anzeigeeinrichtungen 3, 6 können beispielsweise in einen nicht näher bezeichneten Instrumententafelträger des Kraftfahrzeugs integriert sein. Zudem ist es möglich, dass die erste Anzeigefläche 4 gekrümmt ist, und zwar um eine in Fahrzeughochrichtung verlaufende Achse. Dadurch wird ein dreidimensionaler Anzeigeeffekt nochmals verstärkt.

Durch die beschriebene Anordnung der beiden Anzeigeflächen 4, 7 erscheinen mittels der beiden Anzeigeeinrichtungen 3, 6 angezeigte Inhalte für den Fahrer 12 dreidimensional hintereinander angeordnet, und zwar verteilt auf die erste Anzeigefläche 4 und die beiden dahinter angeordneten virtuellen Anzeigeebenen 8, 10. Unterschiedliche Informationen können so dem Fahrer 12 in dreidimensionaler Weise über die drei Anzeigeebenen verteilt dargestellt werden. Da der Fahrer 12 die zweite Anzeigeeinrichtung 6 und die zweite Anzeigefläche 7 gar nicht sehen kann, erscheint der Tiefeneffekt, der aufgrund der beiden virtuellen Anzeigeebenen 8, 10 entsteht, magisch zu entstehen. Durch die intelligente Einbettung der Anzeigeeinrichtungen 3, 6 und somit auch der Anzeigeflächen 4, 7 werden eventuell störende Reflexionen auf ein Minimum reduziert. Die Qualität der Darstellung kann durch die Art der spiegelnden Beschichtung der beiden Anzeigeflächen 4, 7 und die Helligkeit der beiden Anzeigeeinrichtungen 3, 6 präzise gesteuert werden.

Wie bereits erwähnt, werden also insgesamt drei Anzeigeebenen ermöglicht. Die am nächsten am Fahrer 12 angezeigte Anzeigeebene wird durch die erste Anzeigefläche 4 gebildet. Durch die Spiegelung der zweiten Anzeigefläche 7 in der ersten Anzeigefläche 4 wird die mittlere Anzeigeebene in Form der virtuellen Anzeigeebene 8 gebildet. Schließlich wird durch die Spiegelung des unteren, im nicht sichtbaren Bereich liegenden Teilbereichs 9 der ersten Anzeigefläche 4 in der zweiten Anzeigefläche 7 die tiefste, also am weitesten entfernte, virtuelle Anzeigeebene 10 geschaffen. Durch die insgesamt drei hintereinander angeordneten Anzeigeebenen können Informationen besonders intelligent gestaffelt werden, wodurch die Verständlichkeit der angezeigten Informationen gesteigert wird. Zudem ist kein weiteres Zubehör, wie zum Beispiel eine 3D-Brille, notwendig, um den dreidimensionalen Effekt zu erzielen.

In Fig. 2 ist die Fahrgastzelle 5 des Kraftfahrzeugs 1 in einer Perspektivansicht dargestellt. In dieser Darstellung ist noch einmal gut die Anordnung der ersten Anzeigefläche 4, der virtuellen Anzeigeebene 8 und der weiteren virtuellen Anzeigeebene 10 zu erkennen. Die beiden Anzeigeflächen 4, 7 erstrecken sich über die gesamte Breite der Fahrgastzelle 5. Die drei Anzeigeebenen, welche durch die erste Anzeigefläche 4 und beiden virtuellen Anzeigeebenen 8 und 10 geschaffen werden, erstrecken sich bandförmig über die gesamte Breite des Innenraums des Kraftfahrzeugs 1. Beispielsweise können der sichtbare Bereich der ersten Anzeigefläche 4 und die beiden virtuellen Anzeigeebenen 10 eine Höhe von 16 bis 17 Zentimeter aufweisen, wobei diese erst im Bereich der A-Säulen enden.

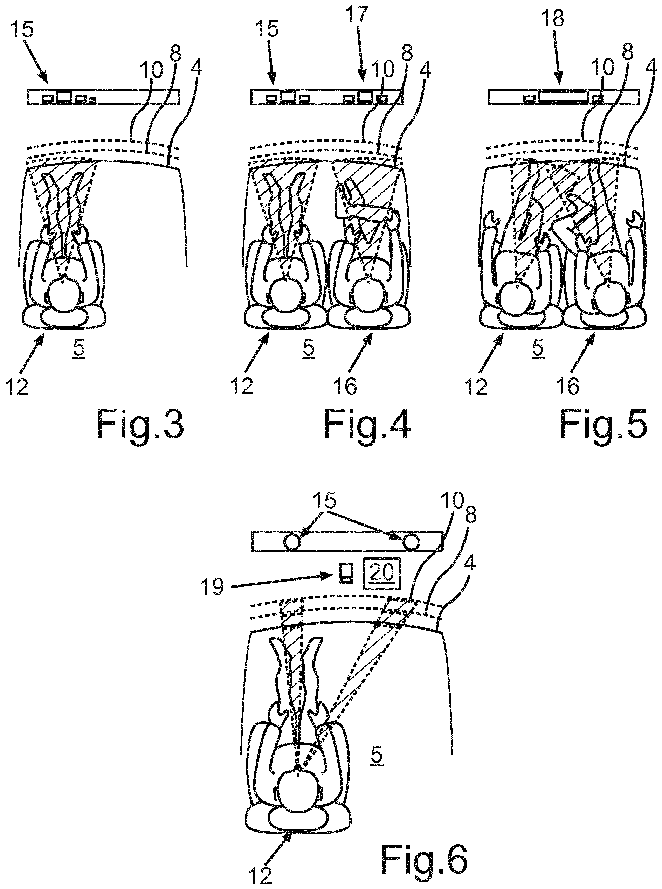

In Fig. 3 ist die Fahrgastzelle 5 in einer schematischen Draufsicht gezeigt, wobei lediglich der Fahrer 12 im Kraftfahrzeug 1 sitzt. Die drei hintereinander angeordneten Anzeigeebenen in Form der ersten Anzeigefläche 4 und der beiden virtuellen Anzeigeebenen 8, 10 sind wiederum schematisch angedeutet. Des Weiteren sind fahrerspezifische Inhalte 15, welche mittels der beiden Anzeigeeinrichtungen 3, 6 direkt vor dem Fahrer 12 angezeigt werden, schematisch dargestellt.

In Fig. 4 ist die Fahrgastzelle 5 in einer weiteren schematischen Draufsicht gezeigt, wobei nun neben dem Fahrer 12 noch ein Beifahrer 16 sitzt. Durch entsprechende Anordnung der beiden Anzeigeeinrichtungen 3, 6 werden verteilt über die erste Anzeigefläche 4 und die beiden virtuellen Anzeigeebenen 8, 10 außer den fahrerspezifischen Inhalten 15 noch beifahrerspezifische Inhalte 17 direkt vor dem Beifahrer 16 eingeblendet. Der Fahrer 12 und der Beifahrer 16 schauen also geradeaus nach vorne, wobei diese jeweils auf sie abgestimmte Inhalte angezeigt bekommen.

In Fig. 5 ist die Fahrgastzelle 5 in einer weiteren schematischen Draufsicht gezeigt, wobei nun der Fahrer 12 und der Beifahrer 16 über die erste Anzeigefläche 4 und die beiden virtuellen Anzeigeebenen 8, 10 verteilt gemeinsame Inhalte 18 angezeigt bekommen. Wie schematisch angedeutet, überschneiden sich die Sichtfelder der beiden Fahrzeuginsassen 12, 16.

In Fig. 6 ist die Fahrgastzelle 5 in einer weiteren schematischen Draufsicht gezeigt, wobei im vorliegenden Fall wiederum nur der Fahrer 12 alleine im Kraftfahrzeug 1 sitzt. Eine Erfassungseinrichtung in Form einer Kamera 19 und eine Steuereinrichtung 20 sind zudem noch schematisch dargestellt. Die Kamera 19 ist dazu ausgelegt, eine Augenposition des Fahrers 12 zu erfassen, wobei die Steuereinrichtung 20 dazu eingerichtet ist, zumindest eine der beiden Anzeigeeinrichtungen 3, 6 in Abhängigkeit von der erfassten Augenposition des Fahrers 12 anzusteuern, um einen Parallaxeneffekt auszugleichen. Verstellt der Fahrer 12 beispielsweise seinen Fahrersitz weiter nach vorne, nach hinten, nach oben oder nach unten, so wird die sich verändernde Augenposition des Fahrers 12 mittels der Kamera 19 erfasst. Die Steuereinrichtung 20 steuert die beiden Anzeigeeinrichtungen 3, 6 dann in Abhängigkeit von der veränderten Augenposition so an, dass unabhängig von der Augenposition des Fahrers 12 dieser die eingeblendeten Inhalte 15, welche verteilt über die drei Anzeigeebenen 4, 8, 10 angezeigt werden, immer gleich wahrnimmt. Unabhängig von der Sitzposition des Fahrers 12 und auch unabhängig von der Statur beziehungsweise Größe des Fahrers 12 können also die Inhalte, welche mittels der beiden Anzeigeeinrichtungen 3, 6 über die drei Anzeigeebenen 4, 8, 10 verteilt angezeigt werden, immer gleich dargestellt werden.

Das gleiche kann auch für den hier nicht dargestellten Beifahrer 16 erfolgen. Um sowohl für den Fahrer 12 als auch für den Beifahrer 16 den Ausgleich des besagten Parallaxeneffekts vornehmen zu können, sind vorzugsweise beide Anzeigeeinrichtungen 3, 6 als Dual-View-Displays ausgebildet. Mittels der beiden Anzeigeeinrichtungen 3, 6 können also blickwinkelabhängig für den Fahrer 12 und den Beifahrer 16 unterschiedliche Inhalte angezeigt werden. Dadurch ist es auch möglich, sowohl für den Fahrer 12 als auch für den Beifahrer 16 einen Parallaxenausgleich vorzunehmen.

## Patentansprüche

1. Kraftfahrzeug (1) mit einer Anzeigeanordnung (2), umfassend
- eine erste Anzeigeeinrichtung (3) mit einer ersten Anzeigefläche (4), welche von einer Fahrgastzelle (5) des Kraftfahrzeugs (1) aus zumindest teilweise einsehbar angeordnet ist;
- eine zweite Anzeigeeinrichtung (6) mit einer zweiten Anzeigefläche (7), welche von der Fahrgastzelle (5) aus uneinsehbar angeordnet ist;
- wobei die beiden Anzeigeflächen (4, 7) derart zueinander angeordnet sind, dass sich die zweite Anzeigefläche (7) in der ersten Anzeigefläche (4) spiegelt und infolgedessen eine von der Fahrgastzelle (5) aus einsehbare virtuelle Anzeigeebene (8) hinter der ersten Anzeigefläche (4) erzeugt wird,
**dadurch gekennzeichnet, dass**
- die erste Anzeigefläche (4) einen Teilbereich (9) aufweist, welcher von der Fahrgastzelle (5) aus unsichtbar und derart zur zweiten Anzeigefläche (7) angeordnet ist, dass sich der Teilbereich (9) in der zweiten Anzeigefläche (7) spiegelt und infolgedessen eine weitere von der Fahrgastzelle (5) aus einsehbare virtuelle Anzeigeebene (10) hinter der virtuellen Anzeigeebene (8) erzeugt wird.

2. Kraftfahrzeug nach Anspruch 1,
**dadurch gekennzeichnet, dass**
die erste Anzeigefläche (4) gekrümmt ist.

3. Kraftfahrzeug nach einem der vorhergehenden Ansprüche,
**dadurch gekennzeichnet, dass**
die erste Anzeigefläche (4) und die zweite Anzeigefläche (7) im Bereich eines Armaturenbretts des Kraftfahrzeugs (1) unterhalb von einer Windschutzscheibe (13) des Kraftfahrzeugs (1) angeordnet sind.

4. Kraftfahrzeug nach einem der vorhergehenden Ansprüche,
**dadurch gekennzeichnet, dass**
die erste Anzeigefläche (4) und die zweite Anzeigefläche (7) sich in Fahrzeugquerrichtung von einem Fahrersitzbereich bis zu einem Beifahrersitzbereich erstrecken.

5. Kraftfahrzeug nach einem der vorhergehenden Ansprüche,
**dadurch gekennzeichnet, dass**
das Kraftfahrzeug (1) eine Erfassungseinrichtung (19) aufweist, welche dazu ausgelegt ist, eine Augenposition von zumindest einem Fahrzeuginsassen (12, 14) zu erfassen, wobei eine Steuereinrichtung (20) dazu eingerichtet ist, zumindest eine der beiden Anzeigeeinrichtungen (3, 6) in Abhängigkeit von der erfassten Augenposition anzusteuern, um einen Parallaxeneffekt auszugleichen.

6. Kraftfahrzeug nach einem der vorhergehenden Ansprüche,
**dadurch gekennzeichnet, dass**
zumindest eines der beiden Anzeigeeinrichtungen (3, 6) ein Bildschirm ist, welcher dazu ausgelegt ist, blickwinkelabhängig zwei unterschiedliche Bildschirminhalte anzuzeigen.

7. Kraftfahrzeug nach Anspruch 6 in dessen Rückbezug auf Anspruch 5, **dadurch gekennzeichnet, dass**
die Erfassungseinrichtung (19) dazu ausgelegt ist, jeweilige Augenpositionen von einem Fahrer (12) und Beifahrer (16) zu erfassen, wobei die Steuereinrichtung (20) dazu eingerichtet ist, den Bildschirm, welcher dazu ausgelegt ist, blickwinkelabhängig zwei unterschiedliche Bildschirminhalte anzuzeigen, in Abhängigkeit den erfassten Augenpositionen anzusteuern, um einen Parallaxeneffekt für den Fahrer (12) und den Beifahrer (16) auszugleichen.

8. Kraftfahrzeug nach einem der vorhergehenden Ansprüche,
**dadurch gekennzeichnet, dass**
die erste Anzeigefläche (4) unterhalb von einer Hutze (14) bezogen auf eine Vorderkante der Hutze (14) zurückversetzt angeordnet ist.

9. Verfahren zum Betreiben einer Anzeigeanordnung (2) eines Kraftfahrzeugs (1) nach einem der vorhergehenden Ansprüche, bei welchem die erste Anzeigeeinrichtung (3) und die zweite Anzeigeeinrichtung (6) derart angesteuert werden, dass Inhalte (15, 17, 18) auf der ersten Anzeigefläche (4), der virtuellen Anzeigeebene (8) und einer weiteren virtuellen Anzeigeebene (10) hinter der virtuellen Anzeigeebene (8) angezeigt werden.

## Claims

1. Motor vehicle (1) having a display assembly (2), comprising
- a first display apparatus (3) having a first display surface (4) which is arranged so as to be at least partially viewable from a passenger compartment (5) of the motor vehicle (1);
- a second display apparatus (6) having a second display surface (7) which is arranged so as not to be viewable from the passenger compartment (5);
- wherein the two display surfaces (4, 7) are arranged in relation to one another such that the second display surface (7) is mirrored in the first display surface (4) and as a result a virtual display plane (8) which is viewable from the passenger compartment (5) is generated behind the first display surface (4),
**characterised in that**
- the first display surface (4) has a partial region (9) which is not viewable from the passenger compartment (5) and is arranged in relation to the second display surface (7) such that the partial region (9) is mirrored in the second display surface (7) and as a result a further virtual display plane (10) which is viewable from the passenger compartment (5) is generated behind the virtual display plane (8).

2. Motor vehicle according to claim 1,
**characterised in that**
the first display surface (4) is curved.

3. Motor vehicle according to any of the preceding claims,
**characterised in that**
the first display surface (4) and the second display surface (7) are arranged in the region of an instrument panel of the motor vehicle (1) below a windscreen (13) of the motor vehicle (1).

4. Motor vehicle according to any of the preceding claims,
**characterised in that**
the first display surface (4) and the second display surface (7) extend in vehicle transverse direction from a driver's seat region as far as a co-driver's seat region.

5. Motor vehicle according to any of the preceding claims,
**characterised in that**
the motor vehicle (1) has a detection apparatus (19) which is configured to detect an eye position of at least one vehicle occupant (12, 14), wherein a control apparatus (20) is configured to control at least one of the two display apparatus (3, 6) depending on the detected eye position, in order to compensate a parallax effect.

6. Motor vehicle according to any of the preceding claims,
**characterised in that**
at least one of the two display apparatus (3, 6) is a screen which is configured to display two different screen contents depending on the viewing angle.

7. Motor vehicle according to claim 6 in its back-reference to claim 5,
**characterised in that**
the detection apparatus (19) is configured to detect respective eye positions of a driver (12) and co-driver (16), wherein the control apparatus (20) is configured to control the screen, which is configured to display two different screen contents depending on the viewing angle, depending on the detected eye positions, in order to compensate a parallax effect for the driver (12) and the co-driver (16).

8. Motor vehicle according to any of the preceding claims,
**characterised in that**
the first display surface (4) is arranged below a cowl (14), offset with respect to a front edge of the cowl (14).

9. Method for operating a display assembly (2) of a motor vehicle (1) according to any of the preceding claims, in which the first display apparatus (3) and the second display apparatus (6) are controlled such that contents (15, 17, 18) are displayed on the first display surface (4), the virtual display plane (8) and a further virtual display plane (10) behind the virtual display plane (8).

## Revendications

1. Véhicule automobile (1) avec un agencement d'affichage (2), comprenant
- un premier dispositif d'affichage (3) avec une première surface d'affichage (4) qui est agencée de manière au moins partiellement visible depuis un habitacle (5) du véhicule automobile (1) ;
- un second dispositif d'affichage (3) avec une seconde surface d'affichage (7) qui est agencée de manière au moins partiellement invisible depuis un habitacle (5) ;
- dans lequel les deux surfaces d'affichage (4, 7) sont agencées l'une par rapport à l'autre de telle manière que la seconde surface d'affichage (7) se reflète dans la première surface d'affichage (4) et de ce fait un plan d'affichage (8) virtuel visible depuis l'habitacle (5) soit généré derrière la première surface d'affichage (4),
**caractérisé en ce que**
- la première surface d'affichage (4) présente une zone partielle (9) qui est agencée de manière non visible depuis l'habitacle (5) et par rapport à la seconde surface d'affichage (7) de telle manière que la zone partielle (9) se reflète dans la seconde surface d'affichage (7) et de ce fait un autre plan d'affichage (10) virtuel visible depuis l'habitacle (5) soit généré derrière le plan d'affichage (8) virtuel.

2. Véhicule automobile selon la revendication 1,
**caractérisé en ce que**
la première surface d'affichage (4) est incurvée.

3. Véhicule automobile selon l'une quelconque des revendications précédentes, **caractérisé en ce que**
la première surface d'affichage (4) et la seconde surface d'affichage (7) sont agencées dans la zone d'un tableau de bord du véhicule automobile (1) en dessous d'un pare-brise (13) du véhicule automobile (1).

4. Véhicule automobile selon l'une quelconque des revendications précédentes, **caractérisé en ce que**
la première surface d'affichage (4) et la seconde surface d'affichage (7) s'étendent dans une direction transversale du véhicule d'une zone de siège de conducteur à une zone de siège de passager.

5. Véhicule automobile selon l'une quelconque des revendications précédentes, **caractérisé en ce que**
le véhicule automobile (1) présente un dispositif de détection (19) qui est conçu afin de détecter une position des yeux d'au moins un occupant de véhicule (12, 14), dans lequel un appareil de commande (20) est aménagé afin de commander au moins un des deux dispositifs d'affichage (3, 6) en fonction de la position des yeux détectée afin de compenser un effet de parallaxe.

6. Véhicule automobile selon l'une quelconque des revendications précédentes, **caractérisé en ce que**
au moins un des deux dispositifs d'affichage (3, 6) est un écran qui est conçu afin d'afficher selon l'angle d'observation deux contenus d'écran différents.

7. Véhicule automobile selon la revendication 6 en référence à la revendication 5, **caractérisé en ce que**
le dispositif de détection (19) est conçu afin de détecter des positions des yeux respectives d'un conducteur (12) et d'un passager (16), dans lequel l'appareil de commande (20) est conçu afin de commander l'écran qui est conçu afin d'afficher en fonction de l'angle d'observation deux contenus d'écran différents, en fonction des positions des yeux détectées afin de compenser un effet de parallaxe pour le conducteur (12) et le passager (16).

8. Véhicule automobile selon l'une quelconque des revendications précédentes, **caractérisé en ce que**
la première surface d'affichage (4) est agencée en déport en dessous d'un capot (14) par rapport à une arête avant du capot (14).

9. Procédé de fonctionnement d'un agencement d'affichage (2) d'un véhicule automobile (1) selon l'une quelconque des revendications précédentes, pour lequel le premier dispositif d'affichage (3) et le second dispositif d'affichage (6) sont commandés de telle manière que des contenus (15, 17, 18) soient affichés sur la première surface d'affichage (4), le plan d'affichage virtuel (8) et un autre plan d'affichage virtuel (10) derrière le plan d'affichage virtuel (8).
